(19) Europäisches Patentamt
European Patent Office
Office européen des brevets

(11) Publication number : 0 398 537 B1

(12) # EUROPEAN PATENT SPECIFICATION

(45) Date of publication of patent specification : 20.10.93 Bulletin 93/42

(51) Int. Cl.$^5$ : **A62D 3/00,** C09K 3/32

(21) Application number : 90304711.6

(22) Date of filing : 01.05.90

(54) **Decontamination of toxic chemical agents.**

(30) Priority : 15.05.89 US 352591

(43) Date of publication of application : 22.11.90 Bulletin 90/47

(45) Publication of the grant of the patent : 20.10.93 Bulletin 93/42

(84) Designated Contracting States : BE DE FR GB NL

(56) References cited :
EP-A- 0 105 743
WO-A-88/01164
DE-A- 3 622 242
GB-A- 2 050 388
US-A- 4 708 869

(73) Proprietor : DOW CORNING CORPORATION
3901 S. Saginaw Road
Midland Michigan 48686-0994 (US)

(72) Inventor : Chromecek, Richard Charles
RFD 1, Litchfield
Connecticut (US)
Inventor : McMahon, John Christopher
2707 N. Sturgeon Road, Midland
Michigan (US)
Inventor : Sojka, Milan Franz
4701 Swede Road, Midland
Michigan (US)

(74) Representative : Horton, Sophie Emma et al
Elkington and Fife Prospect House 8
Pembroke Road
Sevenoaks, Kent TN13 1XR (GB)

EP 0 398 537 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the decontamination of toxic chemical agents in which a decontaminating agent is entrapped within a macroporous crosslinked copolymer. The copolymer is a powder which is a complex structure consisting of unit particles, agglomerates and aggregates.

In accordance with the present invention, copolymer powders are produced by novel processes not believed to be taught in the prior art. The prior art, in general, relates to suspension polymerization processes for the production of porous polymeric and copolymeric spheres and beads in which the precipitant is present during polymerization.

What has been accomplished in accordance with the present invention, however, is a unique concept differing from all of the prior art methods and wherein post adsorbent powders are produced and employed in a novel fashion in decontaminating surfaces contaminated with toxic chemical agents. Toxic chemical agents are chemical substances in gaseous, liquid or solid form, intended to produce casualty effects ranging from harassment to incapacitation to death. Some particular effects produced by such toxic chemical agents can be choking, blood poisoning, lacrimation, nerve poisoning, laxation and various forms of mental and physical disorganization and disorientation. In the event that decontamination cannot be properly handled by natural processes such as wind, rain, dew, sunlight, heat and actinic rays from the sun, some form of chemical decontamination must be employed.

Typical of the prior art systems for decontamination are the use of powders such as carbon, fuller's earth, bentonite and other polymer systems; and solutions of bleach, various solvents and various emulsions, which are sprayed or wiped over the contaminated surfaces with an applicator. Such methods suffer from the disadvantage that the solutions are corrosive and in many cases toxic. Further, there is a need for water which is not always convenient. These prior art techniques are generally not suited for indoor use on interiors and are difficult to employ in low temperature regions of the country. The powders are also ineffective against toxic chemical agents when the agents are in their thickened form.

Thus, it should be apparent that there exists a need for a radically different and effective decontaminating agent for decontaminating various surfaces subject to toxic chemical agent contamination. The present invention fulfils such a need and provides a new decontaminating system which has a reduced toxic effect, does not depend on the use of water in order to function and is capable of use at low temperatures. While cellular polymeric materials are not new to chemical warfare as indicated in US-A- 4,708,869, issued November 24, 1987, the porous copolymeric powders of the present invention are employed to function as a vehicle for the decontaminating agent rather than for the toxic chemical agent as in the '869 patent.

This invention relates to a process of decontaminating a surface contaminated with a toxic chemical agent in which there is applied to the contaminated surface, a macroporous cross linked hydrophobic copolymer containing an agent which is a decontaminant for the toxic chemical agent present on the surface. The decontaminant can be a chemical neutralizer such as sodium hydroxide; lithium hydroxide; concentrated or supertropical bleach; mixtures of diethylene triamine, 2-methoxy ethanol and sodium hydroxide; and other solvents or emulsion based mixtures.

One monomer of the copolymer is a monounsaturated monomer such as lauryl methacrylate and the other monomer of the copolymer is a polyunsaturated monomer such as ethylene glycol dimethacrylate. The copolymer can also be formed using only polyunsaturated monomers. The copolymer is in the form of a powder and the powder is a combined system of particles. The system of powder particles includes unit particles of less than one μm in average diameter, agglomerates of fused unit particles of sizes in the range of twenty to eighty μm in average diameter and aggregates of clusters of fused agglomerates of sizes in the range of two hundred to twelve hundred μm in average diameter.

The invention also relates to an adsorbent for decontaminating toxic chemical agents in which a macroporous crosslinked hydrophobic copolymer is produced by precipitation polymerization in a solvent of monomers soluble therein and a decontaminating agent is entrapped within the copolymer.

Further, the invention relates to a process of removing toxic chemical agents from a surface contaminated with the toxic chemical agent in which there is applied to the contaminated surface, a macroporous crosslinked hydrophobic copolymer, adsorbing the toxic chemical agent into the copolymer and removing the copolymer along with the adsorbed toxic chemical agent from the contaminated surface.

A precipitation polymerization process is used for producing the macroporous crosslinked copolymer. In the process, there is copolymerized at least one monounsaturated monomer and at least one polyunsaturated monomer in the presence of an organic liquid which is a solvent for the monomers but not for the copolymer. The process can also be conducted using only polyunsaturated monomers. The copolymerization of the monomers is initiated by means of a free radical generating catalytic compound, precipitating a copolymer in the solvent in the form of a powder. A dry powder is formed by removing the solvent from the precipitated copolymeric

powder.

Several suitable monomers are disclosed in US-A-4,724,240. The monounsaturated monomer can also be vinyl pyrrolidone, diacetone acrylamide or 2-phenoxyethyl methacrylate. The polyunsaturated monomer can be ethylene glycol dimethacrylate or tetraethylene glycol dimethacrylate. The solvent is preferably isopropyl alcohol, although ethanol, toluene, heptane and cyclohexane, may also be employed.

The monounsaturated monomer and the polyunsaturated monomer can be present in mol ratios of, for example, 20:80, 30:70, 40:60 or 50:50. The process may include the step of stirring the monomers, solvent and the free radical generating catalytic compound, during copolymerization. Preferably, the dry powder is formed by filtering excess solvent from the precipitated powder and the filtered powder is vacuum dried. The powder may then be "post adsorbed" with various decontaminating materials.

The powders of the present invention may also be used as carriers or adsorbents for materials such as water, aqueous systems, emollients, moisturizers, fragrances, dyes, pigments, flavors, drugs such as ibuprofen, phosphoric acid, insect repellents, vitamins, sunscreens, detergents, cosmetics, pesticides, pheromones, herbicides, steroids, sweeteners, pharmaceuticals and antimicrobial agents. Finely divided solids such as analgesic materials can be adsorbed by dissolving the finely divided analgesic in a solvent, mixing the analgesic and solvent with the powder and removing the solvent. Other post adsorbable materials include alkanes, alcohols, acid esters, silicones, glycols, organic acids, waxes and alcohol ethers.

These and other objects, features and advantages, of the present invention will become apparent when considered in light of the following detailed description, including the accompanying drawings.

In the drawings, Figure 1 is a photomicrograph of the various components of the complex structure of the powder produced in Example I and including unit particles, agglomerates and aggregates.

Figures 2 and 3 are photomicrographs of the agglomerates and aggregates of Figure 1, respectively, shown on a larger scale.

Figure 4 is a photomicrograph of a polymer bead produced by suspension polymerization.

Figure 5 is a photomicrograph of the bead of Figure 4 with a portion of the shell removed to reveal the interior structure of the bead.

Figure 6 is a photomicrograph of a hydrophobic copolymeric powder material. The powder is shown in magnification as it appears when the agitation rate employed in the process for producing the hydrophobic powder is zero rpm.

Figures 7-10 are additional photomicrographs of hydrophobic copolymeric powder materials. The powder is shown in magnification as it appears when the agitation rate employed in the process for producing the hydrophobic powder varies from seventy-five rpm up to eight hundred rpm.

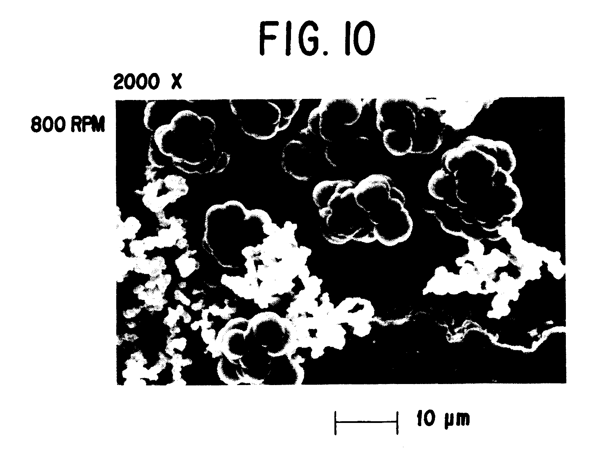

In the above figures in the drawing, the magnification is indicated in each instance. For example, the magnification in Figures 6-9 is 1000X and 2000X in Figure 10. Figures 6-10 also include an insert identifying a length approximating ten microns for comparative purposes.

It should be pointed out, that in viewing the various figures, one will note that as the rate of stirring is increased from zero rpm up to eight hundred rpm, that the size of the unit particles increase. This is in direct opposition to what has been traditionally observed in suspension polymerization systems, wherein increases in stirring rates decrease particle size. Because of the increased size of the unit particles shown in Figure 10 and the resulting decrease in surface area, the adsorptive capacity of these large particles is less than the adsorptive capacity of the smaller sized particles shown in Figures 6-9.

The most effective unit particles can be produced if the rate of stirring is maintained below about three hundred rpm, although particles produced at rates beyond three hundred rpm are useful and adsorptive, but to a lesser extent.

The material of the present invention, can be broadly and generally described as a crosslinked copolymer capable of entrapping solids, liquids and gases. The copolymer is in particulate form and constitutes free flowing discrete solid particles even when loaded with an active material. When loaded, it may contain a predetermined quantity of the active material. One copolymer of the invention has the structural formula:

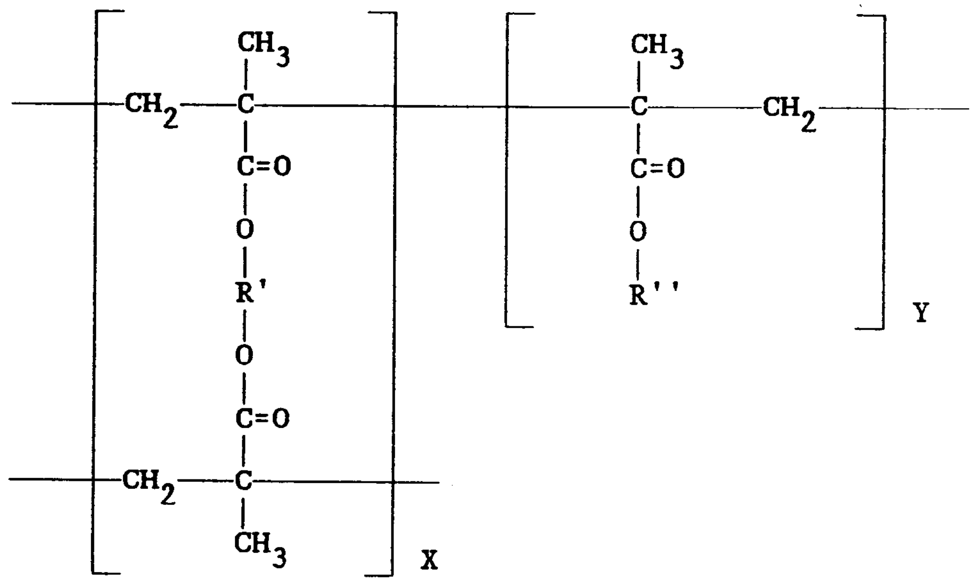

where the ratio of x to y is 80:20, R' is $CH_2CH_2$ and R" is $-(CH_2)_{11}CH_3$.

The copolymer is a highly crosslinked copolymer, as evidenced by the foregoing structural formula, and is more particularly a highly crosslinked polymethacrylate copolymer. This material is manufactured by the Dow Corning Corporation, Midland, Michigan, U.S.A., and sold under the trademark POLYTRAP®. It is a low density, highly porous, free-flowing white particulate and the particles are capable of adsorbing high levels of lipophilic liquids and some hydrophilic liquids, while at the same time maintaining a free-flowing particulate character.

In the powder form, the structure of the particulate is complex and consists of unit particles less than one µm in average diameter. The unit particles are fused into agglomerates of twenty to eighty µm in average diameter. These agglomerates are loosely clustered into macro-particles termed aggregates of 200 to 1200 µm in average diameter.

Adsorption of actives to form "post adsorbed" powder, can be accomplished using a stainless steel mixing bowl and a spoon, wherein the active ingredient is added to the empty dry powder and the spoon is used to gently fold the active into the powder. Low viscosity fluids may be adsorbed by addition of the fluids to a sealable vessel containing the powder and tumbling the materials until a consistency is achieved. More elaborate blending equipment such as ribbon or twin cone blenders can also be employed.

The following example illustrates the method for making a post adsorbent powder, of the type illustrated in Figures 1-3 and 6-10.

Example I

A hydrophobic porous copolymer was produced by the precipitation polymerization technique by mixing in a five hundred milliliter polymerization reactor equipped with a paddle type stirrer, 13.63 grams of ethylene glycol dimethacrylate monomer or eighty mole percent and 4.37 grams of lauryl methacrylate monomer or twenty mole percent. Isopropyl alcohol was added to the reactor as the solvent in the amount of 282 grams. The monomers were soluble in the solvent, but not the precipitated copolymer. US-A- 4,724,240 lists other monomers which may also be employed. The process can be conducted with only polyunsaturated monomers if desired. Other solvents that can be employed are ethanol, toluene, cyclohexane or heptane. The mixture including monomers, solvent and 0.36 grams of catalytic initiator benzoyl peroxide, was purged with nitrogen. The system was heated by a water bath to about 60°C. until copolymerization was initiated, at which time, the temperature was increased to about 70-75°C. for six hours, in order to complete the copolymerization. During this time, the copolymer precipitated from the solution. The copolymerization produced unit particles of a diameter less than one µm. Some of the unit particles adhered together providing agglomerates of the order of magnitude of twenty to eighty µm in diameter. Some of the agglomerates adhered further and were fused and welded one to another, forming aggregates of loosely held assemblies of agglomerates of the order of magnitude of two to eight hundred µm in diameter. The mixture was filtered to remove excess solvent and a wet powder cake was tray dried in a vacuum oven. A dry hydrophobic copolymeric powder consisting of unit particles, agglomerates and aggregates was isolated.

The adsorptive capacity of the hydrophobic particulates produced in Example I, as a function of the stirring rate, was determined. The stirring rate during the reaction in Example I significantly influences the adsorption properties of the particulate materials. The adsorptivity of the particulate materials decreases with an increase in stirring rate and the density of the particulates increases. These results are tabulated and set forth in Tables I-III.

TABLE I

| Agitation Rate (RPM) | Bulk Density Size (g/cc) | Aggregate Size (µm) | Agglomerate Size (µm) | Unit Particle Size (µm) | Adsorption Capacity* |
|---|---|---|---|---|---|
| 0 | 0.067 | 182.5 | 33.9 | 1.0 | 83.0 |
| 75 | 0.077 | 140.6 | 36.6 | 0.5 | 84.8 |
| 150 | 0.071 | 149.8 | 39.8 | 0.8 | 83.0 |
| 300 | 0.293 | 47.0 | 34.0 | 1.5-2.0 | 58.3 |
| 800 | 0.440 | -- | 10.0 | 3.0-5.0 | 37.7 |

* = Percent Silicone Oil

**TABLE II**

| Stirring Speed RPM | Water | Adsorption Capacity % Mineral Oil | Glycerine | Organic Ester* |
|---|---|---|---|---|
| 0 | 0 | 80 | 75 | 80 |
| 75 | 0 | 83.9 | 75 | 81.5 |
| 150 | 0 | 80 | 75 | 80 |
| 300 | 0 | 54.5 | 58.3 | 54.5 |

* = 2-ethylhexyl-oxystearate

**TABLE III**

| RPM | Adsorption Capacity % | | | Density ($g/cm^3$) | |
|---|---|---|---|---|---|
| | Mineral Oil | 2-ethylhexyl oxystearate | Silicone Oil | Bulk | Tapped |
| 0 | 82.5 | 82.5 | 86.5 | 0.0368 | 0.0580 |
| 75 | 82.3 | 82.2 | 86.5 | 0.0462 | 0.0667 |
| 150 | 82.3 | 82.3 | 86.3 | 0.0527 | 0.0737 |
| 200 | 81.5 | 81.5 | 85.7 | 0.0554 | 0.0752 |
| 250 | 79.2 | 80.0 | 84.8 | 0.0636 | 0.0859 |
| 300 | 68.8 | 68.8 | 75.0 | 0.1300 | 0.1768 |
| 450 | 58.3 | 58.3 | 61.5 | 0.1736 | 0.2392 |
| 600 | 54.5 | 54.5 | 60 | 0.1933 | 0.2792 |
| 700 | 42.2 | 42.5 | 45.7 | 0.2778 | 0.4142 |
| 800 | 33.3 | 28.6 | 33.3 | 0.3862 | 0.5322 |
| 1000 | 32.8 | 28.5 | 32.9 | 0.3808 | 0.5261 |

In the foregoing tables, it can be seen that adsorption and density, as a function of stirring rate, was determined for several fluids including a silicone oil, water, mineral oil, glycerine and an organic ester. From zero rpm up to about 250 rpm, the adsorptivity of the porous copolymeric powder particulates of Example I remained essentially consistent. However, at about three hundred rpm, there was a substantial decrease in adsorptivity, which decrease became more apparent as the stirring rate was increased up to about one thousand rpm. A similar pattern is evidenced by the data which are reflective of the density.

This phenomenon is more apparent in the photomicrographic figures of the drawing. Thus, it can be seen from Figure 6, that the particle size of the unit particles increases as the stirring rate is increased, as evidenced by Figure 10. A progression in this phenomenon can be observed in Figures 7-9.

While the procedure of Example I is a precipitation polymerization process and not a suspension polymerization system, the prior art dealing with both "in situ" and "post adsorbed" categories of suspension polymerization processes, teaches that an increase in stirring rate causes a decrease in particle size. This is documented, for example, in US-A- 4,224,415, issued September 23, 1980, and in the PCT International Publication No. WO-88/01164, published on February 25, 1988. The PCT International Publication employs stirring rates upwards of nine hundred to twelve hundred rpm. In Example I of the present invention, however, increases in stirring rates not only do not decrease the particle size, but in fact have exactly the opposite effect, causing the unit particle size to increase. As the rate of stirring is increased from zero rpm up to one thousand, the density of the particles increases and the adsorptive capacity decreases.

In accordance with the above, it should be apparent that it is possible to tailor porous adsorbent powders of a particular particle size and adsorptivity by means of stirring rate. Thus, with large unit particles in Figure 10, the adsorptive capacity is less than the adsorptive capacity of smaller sized unit particles in Figures 6-9. While the most effective particles are produced when the rate of stirring is maintained below about three hundred rpm, particles produced at rates beyond three hundred rpm are useful.

It is important to understand that the method of Example I for the production of hydrophobic porous copolymeric particulate powder materials is characterized as a precipitation polymerization technique. In accordance with this technique, monomers are dissolved in a compatible volatile solvent in which both monomers are soluble. Polymer in the form of a powder is precipitated and the polymer is insoluble in the solvent. No surfactant or dispersing aid is required. The materials produced are powders and not spheres or beads. The powder particulates include unit particles, agglomerates and aggregates. The volatile solvent is subsequently removed resulting in a dry powder, which can be post adsorbed with a variety of functional active ingredients. The suspension polymerization process on the other hand, provides that polymerization be carried out in water and in some cases chloroform or chlorinated solvents. The monomers, the active and the catalyst, form beads or droplets in water and polymerization occurs within each bead. A surfactant or stabilizer, such as polyvinyl pyrrolidone, is required in order to prevent the individually formed beads and droplets from coalescing. The resulting beads, with the active material entrapped therein, include a substantially spherical outer crust or shell, the interior of which contains a macroporous structure of fused unit particles, agglomerates and aggregates. The bead is ten μm in diameter to one hundred-fifty μm, depending upon the rate of agitation employed during the process. Such beads are shown in Figures 4 and 5.

Some unique features of the powders of Example I and Figures 1-3 and 6-10 are their ability to adsorb from sixty to eighty percent of a liquid and yet remain free flowing. The materials provide a regulated release of volatile ingredients such as cyclomethicone entrapped therein and have the capability of functioning as carriers for other non-volatile oils. Loaded powders disappear when rubbed upon a surface. This phenomenon is believed due to the fact that large aggregates of the material scatter light rendering the appearance of a white particulate, however, upon rubbing, these large aggregates decrease in size approaching the range of visible light and hence seem to disappear. The materials find applications in diverse areas such as cosmetics and toiletries, household and industrial products, pesticides, pheromone carriers and pharmaceuticals. The materials do not swell in common solvents and are capable of physically adsorbing active ingredients by the filling of interstitial voids by capillary action. The active ingredients are subsequently released by capillary action or wicking from the voids within the particulates.

In Examples II-IV, the hydrophobic powder material produced in Example I, was surface treated in order to render the hydrophobic powder more hydrophilic. A first method is shown in Example II. A second method is set forth in Example III. Example IV describes an additional step that may be included in the method of Example III. References to hydrophobic powder in Examples II-IV refers to the powder material produced in accordance with Example I.

Example II

5.0 grams of hydrophobic powder was refluxed and stirred with 10.0 grams of NaOH, 150 cc of butyl alcohol and 15 cc of water. After reflux for 4.5 hours, the product was filtered and washed four times with 100 cc of 1:1 isopropyl alcohol and water, once with butyl alcohol and once again with isopropyl alcohol. The powder was vacuum dried to constant weight. Scanning electron microscopic photomicrographs of the treated powder showed no visible change in aggregate structure compared to untreated powder. Electron spectroscopic analysis (ESCA) showed 6 atom % Na at the surface of the powder. Attenuated total reflectance infrared radiation analysis indicated the presence of carboxylate ion (1590 cm-1) in the treated powder. The treated powder was easily wetted by water and produced a viscous paste upon minimal mixing. By comparison, untreated powder was completely non-wetted by water.

Example III

2.5 grams of methacrylic acid was added to 25.0 grams of hydrophobic powder that had been suspended in a mixture of 100 cc toluene, 400 cc heptane and 0.275 grams 1,1′-azobiscyclohexanecarbonitrile. The mixture was flushed with $N_2$ and heated at reflux (104°C.) for 4 hours. The product was filtered, washed with isopropyl alcohol and dried under vacuum to a constant weight. Scanning electron microscopic photomicrographs of the powder showed no apparent change in aggregate structure. Electron spectroscopic analysis (ESCA) showed an enrichment of oxygen (26.4 atom % O) at the surface of the powder compared to untreated powder (20.0 atom % O). The product was wettable by water.

Example IV

5.0 grams of product from Example III was mixed with 2.0 grams NaOH dissolved in a mixture of 200 cc isopropyl alcohol and 50 cc water. The mixture was stirred for 10 minutes at 65°C. The powder was recovered by filtration, washed twice with 300 cc 1:1 isopropyl alcohol $H_2O$ and dried under vacuum to a constant weight. Electron spectroscopic analysis (ESCA) showed the presence of 3.4 atom % Na on the surface of the powder. The powder was highly adsorbent toward water.

Test data showing the hydrophilic nature of the materials produced by the methods of Examples II-IV are set forth in Table IV. It should be apparent from Table IV that the powder materials produced by both the method of Example II and the method of Examples III-IV are capable of adsorbing water, in contrast to the hydrophobic powder of Example I. In fact, Table II shows that the hydrophobic powders produced by Example I did not adsorb water to any extent.

In Example II, the powder of Example I was saponified by reacting the surface with an aqueous alkali, rendering the hydrophobic nature of the powder surface after saponification to be more hydrophilic. Potassium hydroxide and quaternary ammonium hydroxides may also be employed. In Example III, alteration of the surface characteristics of the powder was achieved by polymerizing an acrylate monomer on the surface of the hydrophobic powder in order to form hydrophilic carboxylic acid sites thereon. Another suitable monomer is acrylic acid. The carboxylic acid sites may be further converted to more hydrophilic carboxylate anions in Example IV, by reacting the powder surface containing the carboxylic acid sites with aqueous alkali.

Free flowing adsorption capacity of the surface modified powders of Examples II-IV was determined by addition of incremental amounts of liquid to a known amount of powder, using gentle mixing, until the powder was no longer free flowing. The capacity is shown in Table IV and was expressed as:

$$\frac{(\text{wt. Powder} + \text{Liquid}) - (\text{Initial wt. of Powder})}{(\text{wt. Powder} + \text{Liquid})} \times 100$$

TABLE IV

| Sample | $H_2O$ | Mineral Oil | Ester* | Silicone** |
|---|---|---|---|---|
| | Maximum Free Flowing Adsorption Capacity (%) | | | |
| Untreated Powder Control of Example I | 0 | 77.3 | 78.3 | 78.3 |
| Powder of Example II Saponified With NaOH | 69.8 | 50.4 | 51.2 | 56.0 |
| Powder of Example III | 74.5 | 75.6 | 72.3 | 76.9 |
| Powder of Example IV | 73.0 | 72.3 | 73.0 | 76.2 |

* 2-ethylhexyl oxstearate

** Octamethylcyclotetrasiloxane

Example V

Example I was repeated, except that different monomer systems were employed and at varying mol ratios of the monomers. The copolymeric powders produced were tested for their adsorptive capacity for various lipophilic fluids and for water. The monomer pairs employed, the mol ratios and the adsorption data generated for each monomer pair, are shown in Table V. It will be noted that the powders produced from the monomer pairs of Example V not only were capable of adsorbing substantial quantities of lipophilic fluids, but that water was capable of being adsorbed. This is in contrast to Example I and Table II where no water was adsorbed.

Example V sets forth the concept of the providing hydrophilic-lipophilic copolymeric powders capable of adsorbing water and lipophilic fluids. By a careful selection of monomers, there can be produced adsorbent powder possessing more versatility than the hydrophobic powder of Example I. In addition, the method of Example V is a viable alternative to the surface treatment methods of Examples II-IV and provides powder materials of substantially equivalent utility.

**TABLE V**

| Monomers | Mole Ratio | Absorption Per Cent: 2-Ethylhexyl Oxystearate | Mineral Oil | Glycerine | Water |
|---|---|---|---|---|---|
| Vinyl pyrrolidone* / Ethylene glycol dimethacrylate** | 20/80 | 77 | 74 | 80 | 70 |
| Diacetone acrylamide* / Ethylene glycol dimethacrylate** | 20/80 | 68 | 75 | 73 | 75 |
| Diacetone acrylamide* / Ethylene glycol dimethacrylate** | 30/70 | 68 | 66 | 73 | 72 |
| 2 Phenoxyethyl methacrylate** / Tetraethylene glycol dimethacrylate* | 40/60 | 68 | 64 | 72 | 68 |
| 2 Phenoxyethyl methacrylate** / Tetraethylene glycol dimethyacrylate* | 50/50 | 60 | 60 | 70 | 70 |

* = Hydrophilic

** = Lipophilic

The water adsorbing porous polymeric materials of Examples II-V are to be contrasted with the water containing beads of US-A- 3,627,708, issued December 14, 1971. The bead of the '708 patent is produced by "in situ" suspension polymerization and is adapted to contain water only because of the presence of a solubilizer such as sodium bis(2-ethyl hexyl) sulfosuccinate. The material of Examples II-V, on the other hand, is produced

by a precipitation polymerization process, which contains no solubilizer, and produces a material in the form of a powder consisting of unit particles, agglomerates and aggregates. Thus, these materials are very distinct from the materials of the '708 patent.

In order to demonstrate the use of the powder material of Example I as an adsorbent for the decontamination of toxic chemical agents, two simulated toxic chemical agents were employed. The first simulated toxic chemical agent was dimethyl methyl phosphonate (DMMP) or $CH_3P(O)(OCH_3)_2$ and the second simulated toxic chemical agent was methyl salicylate (MS) or $C_6H_4OHCOOCH_3$. Both simulated chemical agents possess physical properties resembling most toxic chemical agents, MS in particular, and has properties much the same as mustard blister agents. The simulated chemical agents DMMP and MS were thickened to further assimilate the viscous nature of toxic chemical agents by employing four percent by weight of polymethylmethacrylate polymer powder K-125 manufactured by Rohm and Haas Company, Philadelphia, Pennsylvania.

The function of the copolymeric porous powder of Example I is twofold. The first function of the dry empty powder is to directly adsorb toxic chemical agents when it is applied to such surfaces as skin, clothing and equipment; and to thereby physically remove the toxic chemical agent from the surface which is contaminated. The second function of the copolymeric porous powder of Example I is to function as a carrier and delivery mechanism for a decontaminating agent. In the second function, the decontaminating agent is post adsorbed onto the powder of Example I. The loaded or post adsorbed powder is brought into direct contact with a surface contaminated with a toxic chemical agent. Upon adsorbing the toxic chemical agent, the decontaminating material reacts with and neutralizes or renders ineffective the toxic chemical agent present on the surface. Both functions of the copolymeric porous powder of Example I are shown below in Example VI and in Example VII.

Example VI

A twenty-five percent sodium hydroxide solution was used as the decontaminating agent. With the aid of a wetting agent, it was determined that up to sixty-six percent by weight of the decontaminating agent could be post adsorbed on the powder of Example I. The wetting agent employed was an amphoteric surfactant. The surfactant was a substituted imidazoline manufactured by Mona Industries, Inc., Paterson, New Jersey, and sold under the trademark MONATERICS®. Each of MONATERICS® 811, 985A and 1000, were adequate in aiding the adsorption of the twenty-five percent sodium hydroxide decontaminating agent on the powder of Example I, to levels approaching sixty-six percent by weight based on the total weight of the post adsorbed powder. As an alternative to the use of a wetting agent, the surface treated powders of Examples II-IV could be employed, as well as the specialty powders of Example V, any of which are more hydrophilic than the hydrophobic powder of Example I. In any event, a fifty percent loading of the twenty-five percent sodium hydroxide decontaminating agent on the powder of Example I was selected and a post adsorbed powder containing the decontaminating agent was prepared using each of the three Monateric® surfactants. These preloaded post adsorbed powders still adsorbed up to a loading of 75% of either MS or DMMP.

The decontaminating powder was evaluated along with six other conventional powder materials and the capacity of the seven powders for adsorbing DMMP and MS was determined. The results for the adsorption of DMMP are tabulated in Table VI which indicates that the performance of the post adsorbed powder of Example I exceeded the performance of the other six powder materials. The percentages indicated in Table VI are based on the weight of the powder in each instance. Table VII shows the time required for a predetermined quantity of each of the seven powders of Table VI to adsorb a predetermined quantity of DMMP.

Example VII

The empty powder of Example I was sprinkled on glass plates each containing the thickened simulated chemical agents DMMP and MS. The powder and the simulated chemical agent were not further mixed or intermingled. After allowing a brief time for the powder to adsorb the simulated chemical agent, a compressed air stream was directed at each of the plates. In each case, the thickened simulated chemical agent was removed from the glass plate, indicating the ability of the powder of Example I to physically decontaminate surfaces. Similar results were obtained on metal and on painted metal surfaces.

TABLE VI

ADSORPTION CAPACITY FOR DMMP[a]

| | Adsorbent | % Free Flowing[b] | % Total |
|---|---|---|---|
| A. | Powder of Example I | 83.3 | 89.8 |
| B. | Polymeric Powder of Methacryloxypropyl Trimethoxy Silane | 78.3 | 86.5 |
| C. | Acetic Acid Treated Powder of B | 82.8 | 87.1 |
| D. | Methacrylate Polymeric Powder | 77.3 | 84.5 |
| E. | Activated Carbon | 54.6 | 69.9 |
| F. | Fuller's Earth (RVM) | 56.5 | 68.3 |
| G. | Fuller's Earth (LVM) | 54.5 | 66.5 |

[a] = Dimethyl Methyl Phosphonate

[b] = Amount adsorbed to maintain free flowing character of adsorbent particulate

**TABLE VII**

**ADSORPTION RATE OF DMMP[a]**

| Adsorbent | g Adsorbent | g Agent[a] | Time to Capillary Elevation of 72 MM (hrs. - min.) |
|---|---|---|---|
| A. Powder of Example I | 0.1525 | 1.3482 | 2 - 10 |
| B. Polymeric Powder of Methacryloxypropyl Trimethoxy Silane | 0.1509 | 0.9661 | 1 - 10 |
| C. Acetic Acid Treated Powder of B | 0.0822 | 0.5529 | 1 - 50 |
| D. Methacrylate Polymeric Powder | 0.2290 | 1.2477 | 4 - 5 |
| E. Activated Carbon | 0.4614 | 1.0690 | 4 - 30 |
| F. Fuller's Earth (RVM) | 0.3052 | 0.6586 | 4 - 50 |
| G. Fuller's Earth (LVM) | 0.3695 | 0.7335 | 5 - 10 |

a = Dimethyl Methyl Phosphonate

In light of Examples VI-VII and Tables VI-VII, it is believed that the powder materials of the present are of general utility as decontaminating agents and would be effective against most toxic chemical agents. Representative of toxic chemical agents which could be neutralized are choking agents such as phosgene, diphosgene and chlorine; blood agents such as hydrogen cyanide, cyanogen chloride and arsine; vomiting agents such as Adamsite and diphenylchloroarsine; nerve agents such as Tabun which is ethyl phosphorodimethylamidocyanidate, Sarin which is isopropyl methylphosphonofluoridate, Soman which is pinacolyl methylphosphonofluoridate and V-agents such as VX; blister agents such as distilled mustard, nitrogen mustards, Lewisite

and arsine derivatives; tear agents; and incapacitating agents such as BZ which is 3-quinuclidinyl benzilate. The adsorbent copolymeric powder of the present invention can be used to decontaminate such toxic chemical agents occurring on most surfaces including, for example, masks, clothing, gloves, boots, skin, shelters, hardware, equipment and building interiors.

## Claims

1. A process of removing toxic chemical agents from a surface contaminated with the toxic chemical agent comprising applying to the contaminated surface a macroporous crosslinked hydrophobic copolymer, adsorbing the toxic chemical agent into the copolymer and removing the copolymer along with the adsorbed toxic chemical agent from the contaminated surface.

2. The process of claim 1 in which the copolymer contains an agent which is a decontaminant for the toxic chemical agent present on the surface.

3. The process of claim 2 wherein the decontaminant is a chemical neutralizer selected from the group consisting of sodium hydroxide, lithium hydroxide, concentrated bleach and a mixture of diethylene triamine, 2-methoxy ethanol and sodium hydroxide.

4. The process of either of claims 1 or 2 in which the copolymer is in the form of a powder, the powder being a combined system of particles, the system of powder particles including unit particles of less than one µm in average diameter, agglomerates of fused unit particles of sizes in the range of twenty to eighty µm in average diameter and aggregates of clusters of fused agglomerates of sizes in the range of two hundred to twelve hundred µm in average diameter.

5. An adsorbent for decontaminating toxic chemical agents comprising a macroporous crosslinked hydrophobic copolymer, the copolymer having contained therein a decontaminating agent for neutralizing toxic chemical agents.

6. The adsorbent of claim 5 in which the copolymer is produced by precipitation polymerisation in a solvent of monomers soluble therein, the copolymer being in the form of a powder, the powder being a combined system of particles, the system of powder particles including unit particles of less than one µm in average diameter, agglomerates of fused unit particles of sizes in the range of twenty to eighty µm in average diameter and aggregates of clusters of fused agglomerates of sizes in the range of two hundred to twelve hundred µm in average diameter and a decontaminating agent for neutralizing toxic chemical agents being entrapped within the powder.

7. The adsorbent of either of claims 5 or 6 wherein the decontaminating agent is a chemical neutralizer selected from the group consisting of sodium hydroxide, lithium hydroxide, concentrated bleach and a mixture of diethylene triamine, 2-methoxy ethanol and sodium hydroxide.

## Patentansprüche

1. Verfahren zum Entfernen toxischer Chemikalien von einer damit verunreinigten Oberfläche durch Aufbringen eines macroporösen, vernetzten, hydrophoben Copolymeren auf die verunreinigte Oberfläche, Adsorbieren der toxischen Chemikalie im Copolymer und Entfernen des Copolymeren zusammen mit der adsorbierten, toxischen Chemikalie von der verunreinigten Oberfläche.

2. Verfahren nach Anspruch 1,
**dadurch gekennzeichnet**,
daß das Copolymer ein Mittel enthält, das ein Decontaminierungsmittel für die auf der Oberfläche vorhandene toxische Chemikalie ist.

3. Verfahren nach Anspruch 2,
**dadurch gekennzeichnet**,
daß das Decontaminierungsmittel ein chemisches Neutralisierungsmittel ist, ausgewählt aus der aus Natriumhydroxid, Lithiumhydroxid, konzentrierter Bleichlauge und einer Mischung von Diethylentriamin, 2-Methoxyethanol und Natriumhydroxid bestehenden Gruppe.

4. Verfahren nach einem der Ansprüche 1 oder 2,
**dadurch gekennzeichnet**,
daß das Copolymer pulverförmig ist, wobei das Pulver ein kombiniertes System von Teilchen ist, das System von Pulverteilchen enthält Einzelteilchen mit einem mittleren Durchmesser unter 1μm, Agglomerate geschmolzener Einzelteilchen mit einer Größe im Bereich von 20 bis 8Oμm mittlerem Durchmesser und Agglomerate von Anhäufungen von geschmolzenen Agglomeraten mit einer Größe im Bereich von 200 bis 1200μm mittlerem Durchmesser.

5. Adsorptionsmittel zum Decontaminieren toxischer Chemikalien, enthaltend ein macroporöses, vernetztes, hydrophobes Copolymer mit einem darin enthaltenen Decontaminierungsmittel zum Neutralisieren toxischer Chemikalien.

6. Adsorptionsmittel nach Anspruch 5,
**dadurch gekennzeichnet,**
daß das Copolymer durch Fällungspolymerisation in einem die Monomeren lösenden Lösemittel hergestellt ist, das Copolymer pulverförmig ist, das Pulver ein kombiniertes System von Teilchen ist, das System von Pulverteilchen enthält Einzelteilchen mit einem mittleren Durchmesser unter 1μm, Agglomerate geschmolzener Einzelteilchen mit einer Größe im Bereich von 20 bis 80μm mittlerem Durchmesser und Agglomerate von Anhäufungen von geschmolzenen Agglomeraten mit einer Größe im Bereich von 200 bis 1200μm mittlerem Durchmesser und ein Decontaminierungsmittel zum Neutralisieren toxischer Chemikalien, die im Pulver eingeschlossen sind.

7. Adsorptionsmittel nach einem der Ansprüche 5 oder 6,
**dadurch gekennzeichnet**,
daß das Decontaminierungsmittel ein chemisches Neutralisierungsmittel ist, ausgewählt aus der aus Natriumhydroxid, Lithiumhydroxid, konzentrierter Bleichlauge und einer Mischung von Diethylentriamin, 2-Methoxyethanol und Natriumhydroxid bestehenden Gruppe.

## Revendications

1. Un procédé pour éliminer des agents chimiques toxiques d'une surface contaminée par l'agent chimique toxique, comprenant l'application à la surface contaminée d'un copolymère hydrophobe réticulé macroporeux, l'adsorption de l'agent chimique toxique dans le copolymère et l'enlèvement du copolymère, avec l'agent chimique toxique adsorbé, de la surface contaminée.

2. Le procédé de la revendication 1 dans lequel le copolymère contient un agent qui est décontaminant pour l'agent chimique toxique.présent sur la surface.

3. Le procédé de la revendication 2 dans lequel l'agent décontaminant est un agent de neutralisation chimique choisi dans le groupe formé par l'hydroxyde de sodium, l'hydroxyde de lithium, un agent de blanchiment concentré et un mélange de diéthylène triamine, de 2-méthoxy éthanol et d'hydroxyde de sodium.

4. Le procédé selon l'une quelconque des revendications 1 et 2 dans lequel le copolymère est sous la forme d'une poudre, la poudre étant un système combiné de particules, le système de particules de poudre comprenant des particules élémentaires de moins de 1 μm de diamètre moyen, des agglomérats de particules élémentaires fusionnées de diamètres moyens se situant dans l'intervalle de 20 à 80 μm et des agrégats de grappes d'agglomérats fusionnés de diamètres moyens se situant dans l'intervalle de 200 à 1200 μm.

5. Un agent adsorbant pour la décontamination d'agents chimiques toxiques comprenant un copolymère hydrophobe réticulé macroporeux, le copolymère renfermant un agent décontaminant pour la neutralisation d'agents chimiques toxiques.

6. L'agent adsorbant de la revendication 5 dans lequel le copolymère est préparé en polymérisant par précipitation dans un solvant des monomères solubles dans ce solvant, le co-polymère étant sous la forme d'une poudre, la poudre étant un système combiné de particules, le système de particules de poudre

comprenant des particules élémentaires de moins de 1 μm de diamètre moyen, des agglomérats de particules élémentaires fusionnées de diamètres moyens se situant dans l'intervalle de 20 à 80 μm et des agrégats de grappes d'agglomérats fusionnés de diamètres moyens se situant dans l'intervalle de 200 à 1200 μm, et un agent décontaminant destiné à neutraliser des agents chimiques toxiques étant emprisonné dans la poudre.

**7.** L'agent adsorbant de l'une ou l'autre des revendications 5 et 6 dans lequel l'agent décontaminant est un agent de neutralisation chimique choisi dans le groupe formé par l'hydroxyde de sodium, l'hydroxyde de lithium, un agent de blanchiment concentré et un mélange de diéthylène triamine, de 2-méthoxy éthanol et d'hydroxyde de sodium.

FIG.1

1500 X

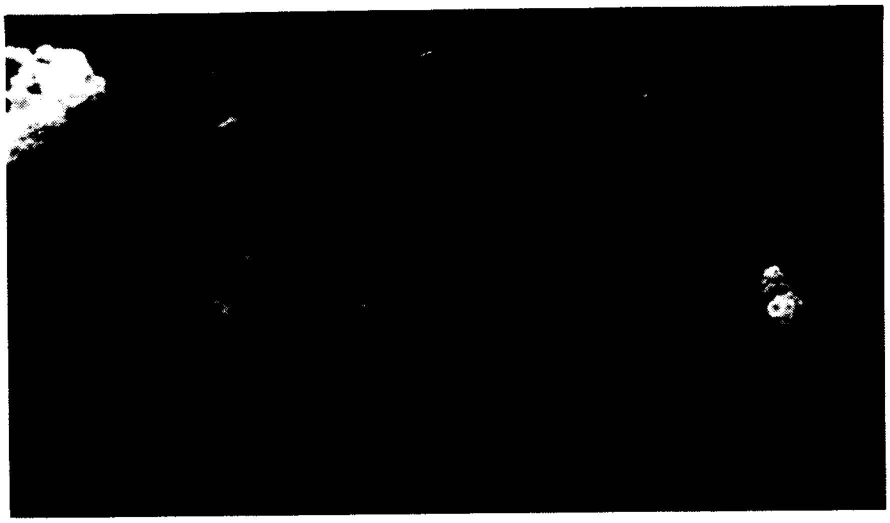

FIG.2

10000 X

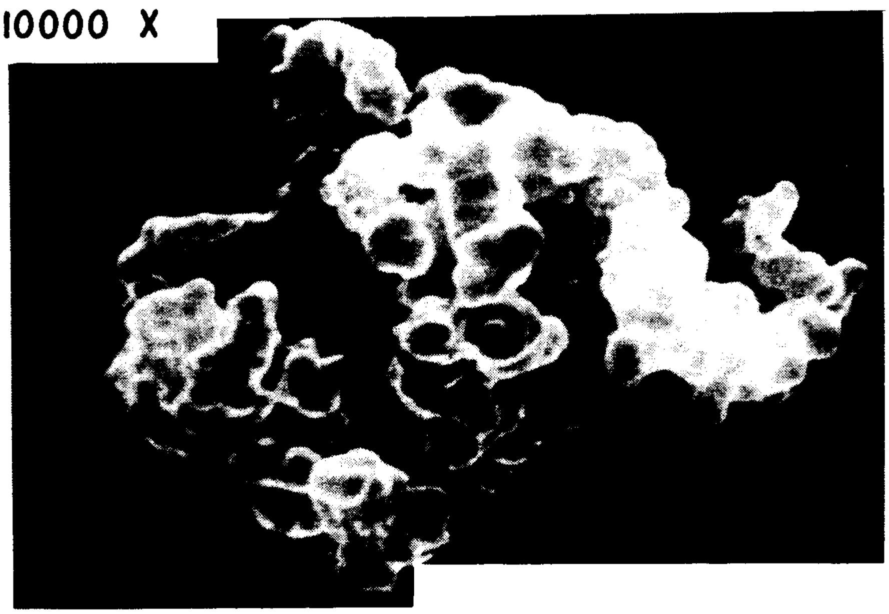

FIG.3

2000 X

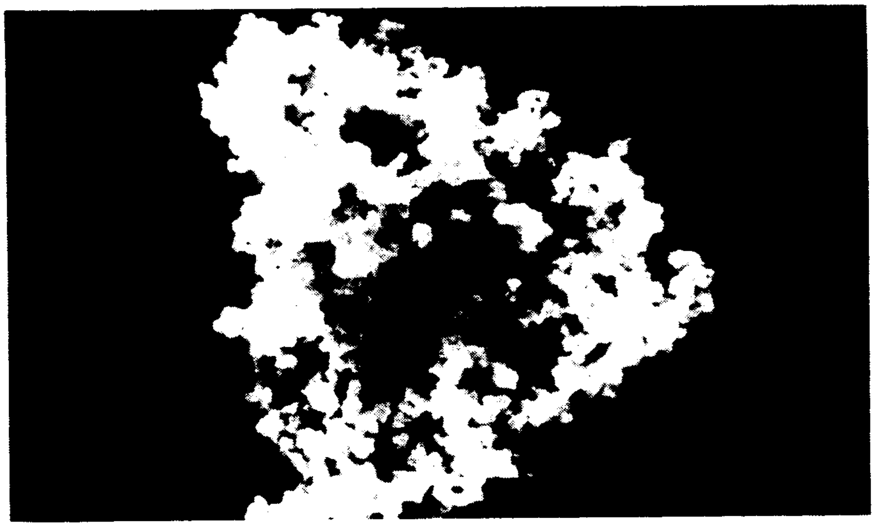

FIG.4

1500 X

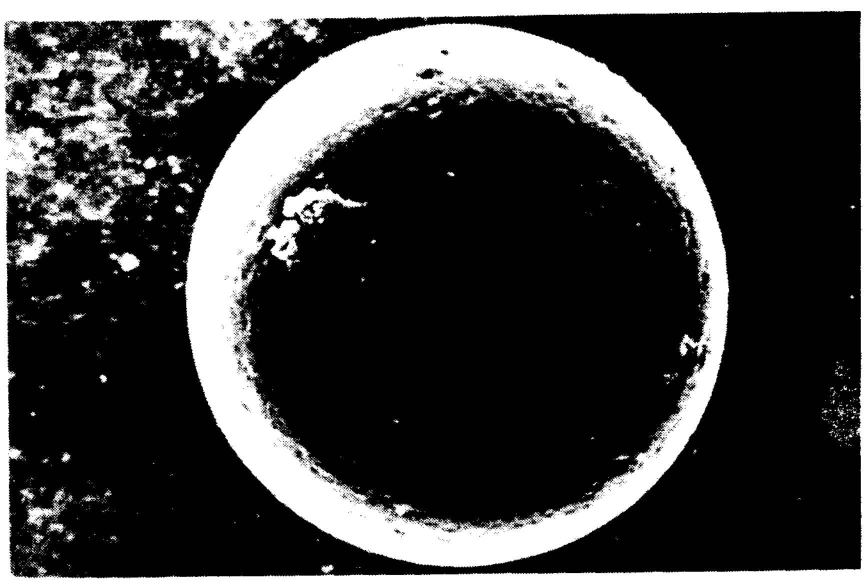

FIG. 5

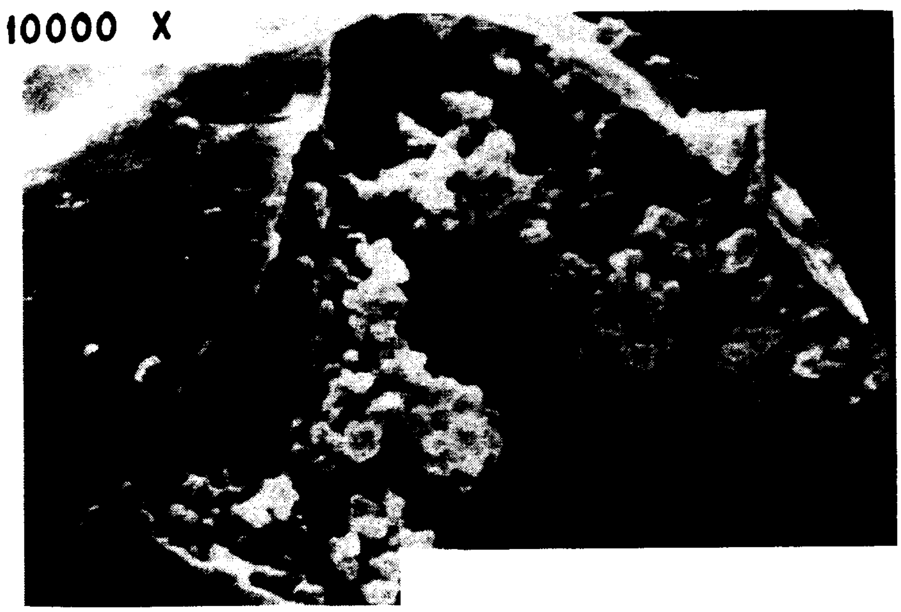

FIG.6

1000 X

0 RPM

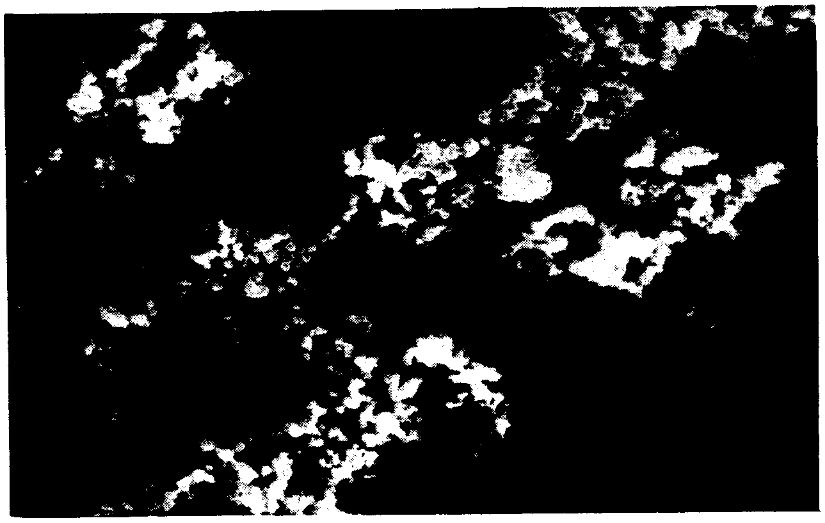

10 μm

FIG.7

1000 X

75 RPM

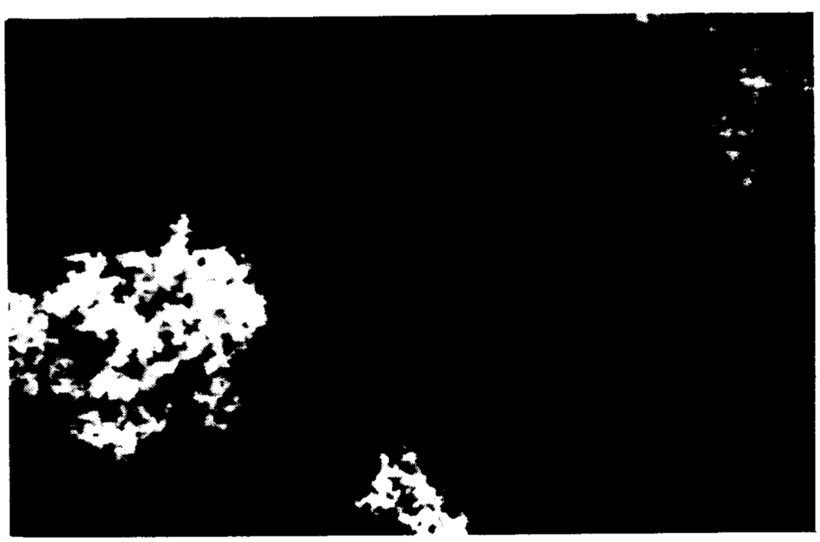

10 μm

FIG.8

1000 X

150 RPM

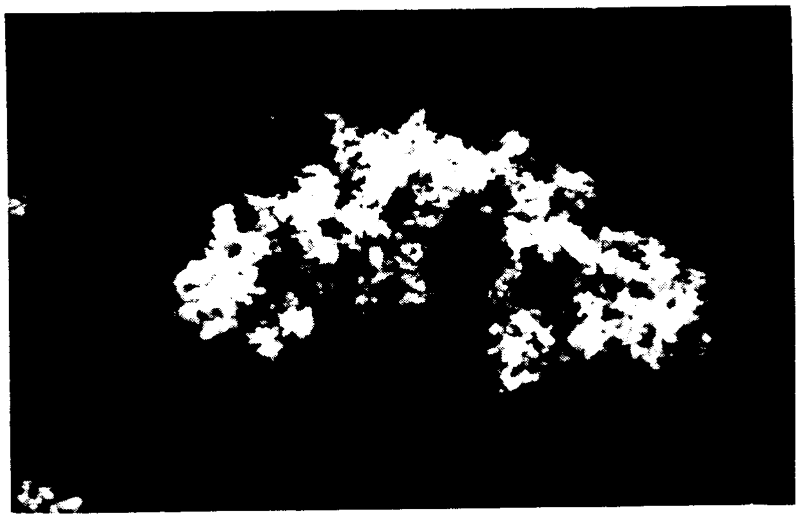

10 μm

FIG.9

1000 X

300 RPM

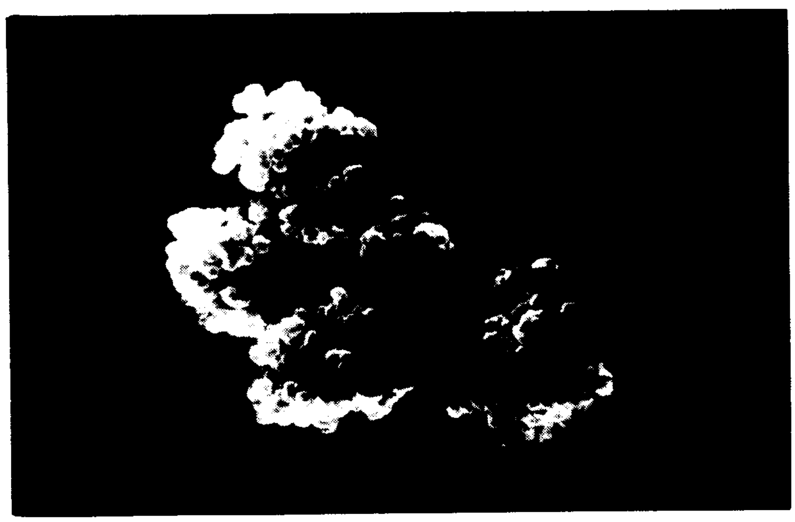

10 μm

FIG. 10